(19) **Europäisches Patentamt**
**European Patent Office**
**Office européen des brevets**

(11) **EP 4 610 617 A1**

(12) **EUROPEAN PATENT APPLICATION**

(43) Date of publication:
**03.09.2025   Bulletin 2025/36**

(21) Application number: **24160135.0**

(22) Date of filing: **28.02.2024**

(51) International Patent Classification (IPC):
**G01M 13/04** $^{(2019.01)}$

(52) Cooperative Patent Classification (CPC):
**G01M 13/045; F16C 41/007**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
 • **HENCKEN, Kai**
  **79539 Lörrach (DE)**

 • **CUERVO REYES, Eduardo**
  **8050 Zürich (DE)**
 • **BOILLAT, David**
  **5246 Scherz (CH)**
 • **HERAIEF, Alexis**
  **8047 Zürich (CH)**
 • **SCHRAG, Daniel**
  **8426 Lufingen (CH)**
 • **CORTINOVIS, Andrea**
  **5415 Rieden (CH)**

(74) Representative: **Sykora & König Patentanwälte PartG mbB**
**Maximilianstraße 2**
**80539 München (DE)**

(54) **METHOD, CONTROLLER, AND COMPUTER PROGRAM FOR DETECTING A FAULT OF A BEARING, AND COMPUTER-READABLE MEDIUM**

(57)    A method for detecting a fault of a bearing (6) is described. The method comprises: receiving a position-speed-signal (29), wherein the position-speed-signal (29) is representative of instantaneous angular speeds (vi) of teeth (12) of a wheel (10) of a rotary encoder (8) and of unique numbers (i) of corresponding encoder pulses (28) from the rotary encoder (8); determining the instantaneous angular speeds (vi) and the corresponding unique numbers (i) from the position-speed-signal (29) several times; generating a speed signal comprising consecutive ones of the instantaneous angular speeds (vi); shifting the generated speed signal depending on a predetermined shifting frequency ($f_{shift}$); applying a low pass filter on a correspondingly shifted speed signal ($v_{shifted}$); determining a decimated speed signal ($v_{shifted\_filtered\_downsampled}$) from a correspondingly shifted and filtered speed signal ($v_{shifted\_filtered}$), wherein the decimated speed signal ($v_{shifted\_filtered\_downsampled}$) is representative for a subset of the realigned instantaneous angular speeds ($v_n$) represented by the shifted and filtered speed signal ($v_{shifted\_filtered}$); and detecting the fault of the bearing (6) depending on the determined decimated speed signal ($v_{shifted\_filtered\_downsampled}$).

**Fig. 1**

EP 4 610 617 A1

## Description

FIELD OF THE INVENTION

The invention relates to the field of detecting a fault of a bearing. In particular, the invention relates to a method, a controller, and a computer program for detecting a fault of a bearing, and to a computer-readable medium on which the computer program is stored.

BACKGROUND OF THE INVENTION

A bearing is a machine element that constrains a relative motion to only a desired motion and reduces friction between moving parts. Bearings are classified broadly according to their type of operation, the motions allowed by the corresponding bearing, or to directions of loads (forces) applied to parts of the bearings. In particular, rotary bearings can hold rotating components such as shafts or axles within mechanical systems and can transfer axial and radial loads from a source of the load to the structure supporting it. The present description refers to rotary bearings only. Conveniently, the rotary bearings are referred to as bearings only in this description.

In case of a fault of such a bearing, the bearing cannot rotate smoothly anymore. Because of the rotation of the bearing and because of the fact that the fault of the bearing disturbs the smooth rotation of the bearing at every rotation, the bearing will start vibrating during its rotation. For example, in case of a ball bearing or a roller bearing - both being rotary bearings - the fault may be a damage of one of balls or rollers of the corresponding bearing, and this damaged ball or, respectively, roller rotates within a casing of the bearing. Alternatively, the fault may be a damage to either an outer or inner race of the bearing which may hinder the smooth motion of a ball or roller in a cage of the bearing.

As long as the bearing rotates with at a constant speed, the fault will influence the bearing on periodical steps. In this case, a fault diagnosis for detecting the fault may be carried out by an analysis of the vibrations of the bearing, wherein a separate detection device is necessary, leading to increased costs and complexity of the overall system. Alternatively, a current provided by a converter to a motor coupled to or comprising the bearing may be analyzed, which is also a very complex task. Further, the fault must influence the bearing periodically and the bearing must rotate at least at approximately the constant speed in order to receive precise information regarding the fault from these analyses.

In order to deal with the speed of the rotation not being constant, an instantaneous angle approach was developed some time ago, which allows to identify the speed of an axle of the bearing at very small, in particular smallest angles of rotation. For example, the paper "Natural roller bearing fault detection by angular measurement of true instantaneous angular speed", by L. Renaudin, F. Bonnardot, O. Musy, J.B. Doray, and D. Re'mond, Mechanical Systems and Signal Processing 24 (2010) pages 1998-2011.

This approach may deal with the change of the speed of rotation and may contribute to provide a precise analysis of the fault of the bearing. However, the data needed for the analysis are gathered at such a high speed and the data processing is such complex that up to now this analysis can be carried out offline only. This means that the data have to be gathered and recorded while the bearing rotates and the analysis of the data and as such the fault detection is carried out independent thereof, in particular afterwards, e.g. with the help of a Fourier transform.

For example, EP 2 630 453 B1 describes a method for monitoring a rotating element belonging to a mechanical transmission of a wind turbine. The method comprises the steps of: determining a signal representative of the instantaneous angular velocity of the rotating element over an acquisition duration, sampling the signal representative of the instantaneous angular velocity with a constant angular pitch over a determined number of samples, calculating the discrete Fourier transform of the signal representative of the angular velocity so as to obtain an order spectrum of the signal representative of the angular velocity, and detecting the fundamental frequency of appearance of a defect of the rotating element on the order spectrum of the signal representative of the angular velocity.

DESCRIPTION OF THE INVENTION

It is an objective of the present invention to provide a method, a controller, and a computer program for detecting a fault of a bearing, in particular a rotary bearing, which can be carried out while the bearing is operated, in particular rotating, in particular at varying speeds, and which is accurate, in particular under these conditions. It is another objective of the present invention to provide a computer-readable medium on which the computer program is stored.

This objective is achieved by the subject-matter of the independent claims. Further exemplary embodiments are evident from the dependent claims and the following description.

An aspect of the invention relates to a method for detecting a fault of a bearing. The bearing comprises an axle of rotation and is coupled to a rotary encoder. The rotary encoder is communicatively coupled to an integrated circuit. The rotary encoder comprises an encoder wheel having a given number of teeth and being coupled to the axle of the bearing such that the encoder wheel rotates around the axle of the bearing at a speed which is proportional to a speed of the bearing and an encoder sensor being arranged facing the teeth and being configured for generating an encoder signal having at least one encoder pulse for every tooth of the encoder wheel passing the encoder sensor. The integrated circuit is configured for receiving the encoder signal, for counting the encoder pulses from the encoder signal, for assigning consecutive unique numbers to the counted encoder pulses, and for generating a position-speed-signal containing information being representative of instantaneous angular speeds of the teeth and of the unique numbers of the corresponding encoder pulses. The method comprises: receiving the position-speed-signal from the integrated circuit; determining the instantaneous angular speeds and the corresponding unique numbers from the information contained in the position-speed-signal several times; generating a speed signal comprising consecutive ones of the instantaneous angular speeds; shifting the generated speed signal depending on a predetermined shifting frequency; applying a low pass filter on the shifted speed signal; determining a decimated speed signal from a correspondingly shifted and filtered speed signal, wherein the decimated speed signal is representative for a subset of the instantaneous speeds represented by the shifted and filtered speed signal; detecting the fault of the bearing depending on the determined decimated speed signal.

The motor, the bearing, and the rotary encoder may be components of a vehicle, wherein the motor may be used for driving the vehicle. The vehicle may be a car, a bus, or a train. The method may be carried out by a controller for detecting the fault of the bearing. The controller may be another component of the vehicle. The speed signal comprising the instantaneous angular speeds and being shifted, low pass filtered and decimated enables to carry out the fault detection during a rotation of the bearing and thereby during a trip of the vehicle comprising the bearing while keeping a high resolution in a frequency range of interest, wherein the frequency range refers to a range of angular frequencies. In the present description the term "frequency" refers to an angular frequency. Using the instantaneous angular speeds for the fault detection enables to carry out the method while the rotational speed of the bearing changes. So, in case of the bearing being a part of a e.g. a power train of a train, the fault detection may be carried out not only during the train is driving at an approximate constant speed but also when the driving train changes its speed.

An overall aim of the proposed fault detection method may be a reduction of the data collected by the encoder, e.g. from a total of a few Million samples to a few hundred samples, in order to store it and process it, e.g. with the controller, without losing a resolution of the angular frequency in the required frequency range. So, the focus of the fault detection is put on the relevant frequency range only, keeping in mind that a narrow range of possible angular frequencies may be known, but the exact frequency may still vary within this narrow range such that the exact frequency is not known in advance. The controller may comprise or may be a monitoring device.

An angular distance from one of the teeth to the next teeth may be $d\theta = \delta_i$, with i being a natural number representing the number of the correspondingly counted tooth. An overall angle around which the encoder wheel rotated when starting the measurement may be

$$\theta_i = \sum_{k=1}^{i} d\delta_k$$

, with k being a natural number. The above-mentioned unique numbers may be the overall angle $\theta_i$ at the time the corresponding teeth passed the encoder sensor, or the index i, i.e. the number of counted tooth.

The position-speed-signal containing the information which is representative of the instantaneous angular speeds and the unique numbers may comprise several pairs of values, with each pair of values comprising the information being representative of one of the instantaneous angular speeds and the corresponding unique number. The information being representative of the instantaneous angular speeds may be the instantaneous angular speeds itself or a parameter value from which the corresponding instantaneous angular speed may be derived, e.g. a duration from an initial detection of the corresponding tooth and an initial detection of the next tooth. The "initial detection" may refer to a detection of a rising edge of the corresponding tooth. So, when each of the pairs of values comprises one of the instantaneous angular speeds, the instantaneous angular speeds and the corresponding unique numbers may be readout directly from the position-speed-signal. Alternatively, when each of the pairs of values comprises the parameter value representative of the corresponding instantaneous angular speed and the corresponding unique number, the unique number and the corresponding parameter value may be readout from the position-speed-signal and the corresponding instantaneous angular speed may be derived from the readout parameter value, e.g. by the controller.

The instantaneous angular speeds may be determined depending on an angular resolution of the encoder wheel, wherein the angular resolution may be determined depending on the given number of teeth of the encoder wheel. The bearing may be a motor bearing, a gear bearing, or an axle bearing. The encoder wheel comprises a given number of teeth, e.g. 400, 800, or 1600 teeth. The encoder sensor generates at least a corresponding number of encoder pulses per rotation of the encoder wheel, with each encoder pulse comprising a raising and a falling edge and with at least one encoder pulse for each passing tooth. An angular resolution $F_S$ of the encoder may be given by $2\pi/d\theta$, with $d\theta$ being an angle between a mid of one of the teeth and the following tooth. The angular resolution $F_S$ depends on the number of distinguishable positions per rotation. In the simplest case, i.e. exactly one encoder pulse for each passing tooth and exactly one encoder channel, the angular resolution $F_S$ is equal to the number of teeth. For example, in the case of e.g. 400 teeth and one encoder channel only, the angular resolution $F_S$ is 400. After one complete rotation of the encoder wheel, the encoder sensor keeps on counting. For example, in the example of the encoder wheel having 400 teeth, the number of the counted teeth passing the encoder sensor is larger than 400 after one complete rotation. In the reality, the fault detection may be carried out based on an encoder signal generated by more than 1.000 rotations of the encoder wheel, wherein the number of counted teeth and corresponding encoder pulses may be correspondingly high.

To increase the angular resolution $F_S$, the number of distinguishable positions per rotation may be increased, e.g. by providing two or more encoder sensors and correspondingly two or more encoder channels. In this case, for each of the further encoder channels an additional encoder pulse may be generated per counted tooth. Alternatively or additionally, the number of distinguishable positions per rotation may be increased by counting not only the number of teeth but the number of the raising and falling edges of the teeth. In this case, the encoder signal comprises two encoder pulses for each counted tooth. Alternatively or additionally, gaps between the teeth may be counted. Further, these measures for increasing the angular resolution $F_S$ may be combined to achieve an even higher angular resolution $F_S$.

That the encoder signal comprises the encoder pulses may mean that the encoder signal contains the encoder pulses or consists of the encoder pulses. The encoder signal may comprise low levels and high levels, wherein each encoder pulse is represented by a corresponding raising edge, the following falling edge, and the high level in between. For example, the encoder signal has the high level when one of the tooth passes the encoder sensor and the low level when a gap between two of the teeth passes the encoder sensor. Thus, the length of the encoder pulses at the high level is representative for the time the corresponding tooth needs to pass the encoder sensor and therefore the duration between a detection of two consecutive ones of the encoder pulses is representative of the instantaneous angular speed at this position. All of the encoder pulses have the same length in time as long as the speed of rotation of the bearing stays constant. The encoder pulses get longer and longer during a deceleration of the speed of rotation, because the duration during which the encoder sensor "sees" every passing tooth gets longer. The pulses get shorter and shorter during an acceleration of the speed of rotation, because the duration during which the encoder sensor "sees" every passing tooth gets shorter. Therefore, the encoder pulses, in particular the lengths of the high levels of the encoder pulses are representative for the instantaneous angular speeds of the corresponding encoder pulses. So, the encoder signal comprises the information being representative for the instantaneous angular speed of the teeth passing the encoder sensor and in addition for the number i of the correspondingly counted teeth.

The integrated circuit may be a component of the rotary encoder, or a component electrically and communicatively coupled in between the rotary encoder and the controller carrying out the method. For example, the integrated circuit may be a FPGA and/or may comprise a shift register, as described in the following.

According to an embodiment, the method comprises, after determining the unique numbers from the position-speed-signal and before generating the speed signal: determining from the determined unique numbers whether some of the information regarding one or more of the instantaneous angular speeds is missing; if the information regarding one or more of the instantaneous angular speeds is missing, determining the missing information, determining the instantaneous angular speeds from the information readout from the position-speed-signal and from the determined missing information, realign the determined instantaneous angular speeds such that an order of realigned instantaneous angular speeds corresponds to an order of the corresponding consecutive numbers, and generating the speed signal comprising the realigned instantaneous angular speeds; or if no information regarding instantaneous angular speeds is missing, generating the speed signal comprising the instantaneous angular speeds as represented by the corresponding information in the position-speed-signal. This enables to not lose any instantaneous angular speeds even if the corresponding information is missing. That the speed signal is generated such that it comprises the instantaneous angular speeds "as represented by the corresponding information in the position-speed-signal" may mean that the instantaneous angular speeds have the same order in the speed signal as the corresponding information in the position-speed-signal.

According to an embodiment, the integrated circuit comprises the shift register in which the information of the position-speed-signal being representative of a predetermined amount of consecutive ones of the instantaneous angular speeds is stored, the missing information is determined by reading the corresponding information from the shift register, and the instantaneous angular speeds are determined from the information readout from the position-speed-signal and from the shift register. This enables not to lose any information even if the tooth are counted faster than the corresponding information is read out from the position-speed-signal.

According to an embodiment, the missing information is determined by interpolating the information which is present. This enables not to lose any information even if the tooth are counted faster than the corresponding information is read out from the position-speed-signal, in particular without the need for the shift register. The information may be interpolated by interpolating the instantaneous angular speeds directly, in case the instantaneous angular speeds are available, or by interpolating the durations being representative of the instantaneous angular speeds. In the latter case, the missing instantaneous angular speeds may be determined from the interpolated durations.

According to an embodiment, if one or more of the unique numbers are determined two, three or more times, in particular by the controller, the duplicates of the corresponding information and the corresponding unique numbers are deleted, and speed signal is generated such that it comprises each of the corresponding instantaneous angular speeds only once. This enables to have consecutive instantaneous speeds even if the same information is readout two or more times.

According to an embodiment, the method comprises the step of applying a predetermined window over the generated speed signal, before shifting the speed signal. The window may contribute to avoid artifacts coming from the finite and non-periodic nature of the measurement of the encoder. The window may contribute to remove high noise level coming from "discontinuities" at a beginning or end of the measurement of the encoder. The window may be a mathematical function. That the window is "applied" over the generated speed signal may mean that the speed signal is folded with the window and/or that the speed signal is multiplied with the window.

According to an embodiment, the shifted and filtered speed signal consists of an amount of values, with these values being representative of the corresponding instantaneous angular speeds, and the decimated speed signal is determined from the shifted and filtered speed signal by using only every $m^{th}$ value of the shifted and filtered speed signal, and by cancelling all other values of the shifted and filtered speed signal, with m being a natural number. In this embodiment, every $m^{th}$ value may be kept and all other values may be cancelled. "m" may for example be 10, such that the amount of speed values of the speed signal is decimated by the factor of 10. Alternatively, other values for m may be possible, e.g less than 10, e.g. 3 or 5, or more than 10, e.g. 50 or 100.

According to an embodiment, the fault of the bearing is detected depending on the determined decimated speed signal by determining one or more periodic components of the decimated speed signal and by detecting the fault of the bearing depending on the determined one or more periodic components. This may contribute to determine the fault very accurately and in a simple way.

According to an embodiment, detecting the one or more periodic components of the decimated speed signal comprises carrying out a Fourier transformation on the decimated speed signal, determining a power spectrum depending on the transformed speed signal, and identifying one or more maxima in the power spectrum as the one or more periodic components. The periodic component detection may be carried out by MUSIC or ESPRIT which are algorithms for detecting periodic components in signals known and widely used in the art.

According to an embodiment, the method comprises confirming the presence of one or more of the detected periodic components. For example, the method described in the foregoing may be carried out several times, in particular the steps of detecting the presence of the periodic components, and the results of these several measurements may be combined. When a fault is in fact present, this fault may generate the same periodic components again and again over these measurements. Therefore, it may be checked whether the periodic components found each time are identical or at least in the same frequency range. Two of the periodic components may be determined as being in the same frequency range when the deviation of the frequency of one of the periodic components to the frequency of the other one of the periodic components is between 0 and 1%, e.g. between 0 and 0.5 %, e.g. between 0 and 0.25 %. So, when the results show the same or at least similar periodic components over several measurements the presence of the corresponding periodic components and thereby of the fault may be confirmed. In addition, a signal-to-noise ratio may be considered. The signal-to-noise ratio may refer to a "strength" of the periodic components compared to the background not associated with the periodic components.

According to an embodiment, the method comprises carrying out a predetermined number of measurements in accordance with the steps of the method explained in the foregoing over a predetermined period of time and keeping, in other words storing, measured amplitudes and/or another measure of the intensities of the detected periodic components and using an evolution of the amplitudes or, respectively, the other measures to predict a probability of a failure of the bearing an/or a time until the failure of the bearing is expected. The extended period of time may be several weeks, months, or years. The amplitude or measure of the intensity of such a periodic component may increase over time, following a corresponding increase of the severity of the damage to the bearing. Therefore, it can be predicted, when the signal may reach a critical level, which is strongly correlated with the failure of the bearing.

An aspect of the invention relates to the controller for detecting the fault of the bearing. The controller comprises an interface for receiving the position-speed-signal; a memory for (at least temporarily) storing the information contained in the position-speed-signal; and a processor communicatively coupled to the interface and the memory and being configured to carry out the method as explained above and in the following based on the information. The controller may carry out the method online, i.e. while the corresponding vehicle is driving. In this case, the information does not need to be stored permanently, e.g. in a hard drive. Therefore, the memory may be a working memory, e.g. a Random Access Memory (RAM).

An aspect of the invention relates to a computer program for detecting the fault of the bearing. The computer program is configured for carrying out the above method when being executed by the above controller.

An aspect of the invention relates to a computer-readable medium on which the above computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer-readable medium may also be a data communication network, e.g. the Internet, which allows downloading a program code. In general, the computer-readable medium may be a non-transitory or transitory medium.

It has to be understood that some features, advantages, and/or technical effects of the present invention are described with respect to the method only, some with respect to the controller only, some with respect to the computer program only, and some with respect to the computer-readable medium only. However, a person skilled in the art will recognize that these features, advantages, and/or, respectively, technical effects may be easily transferred from the corresponding aspect to another one of the above aspects.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows a motor, a bearing, an encoder, and a controller in accordance with an exemplary embodiment of the present invention.

Fig. 2 shows an example of the encoder of figure 1 and a diagram illustrating a detection principle of the encoder, in accordance with an embodiment of the present invention.

Fig. 3 shows an example of an encoder signal generated by the encoder of figures 1 and 2, in accordance with an embodiment of the present invention.

Fig. 4 illustrates a principle of realigning instantaneous angular speeds, in accordance with an embodiment of the present invention.

Fig. 5 illustrates a principle of a usage of a shift register to not miss any information regarding instantaneous angular speeds, in accordance with an embodiment of the present invention.

Fig. 6 shows an example of a speed signal, in accordance with an embodiment of the present invention.

Fig. 7 shows an example of a window applied to the speed signal shown in figure 6.

Fig. 8 shows a flow-chart of an exemplary embodiment of a method for detecting a fault of the bearing of figure 1.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

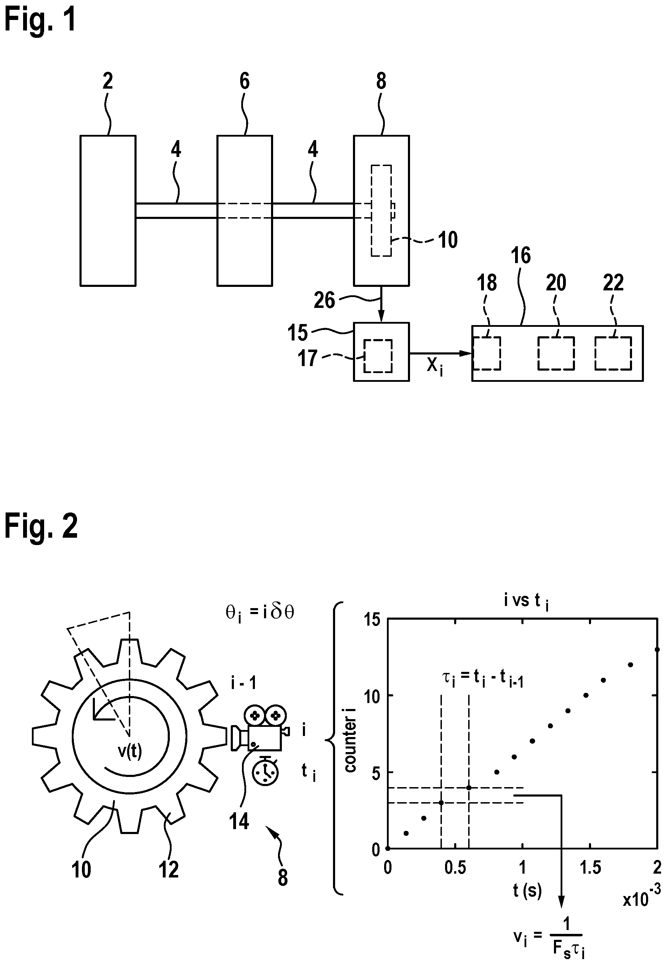

Fig. 1 shows a motor 2, a bearing 6, an encoder 8, and a controller 16 in accordance with an exemplary embodiment of the present invention.

The motor 2 may be arranged in and/or may be configured for driving a vehicle, e.g. a car, a bus, or a train. The motor 2 may be an electric motor or a combustion engine. The bearing 6 is a rotary bearing, or short "bearing" in the following. The bearing 6 may be a motor bearing, a gear bearing, or an axle bearing. The bearing 6 may be mechanically coupled to the motor 2 by an axle 4 which may be an axle of rotation of the motor 2 and optionally also of the bearing 6. There may be arranged one or more further axles and/or a transmission arranged for mechanically coupling the motor 2 to the bearing 6. In this case, the bearing 6 may rotate around another axle (not shown) than the motor 2. However, for explanatory reasons, only the axle 4 is shown as a representation for the mechanical coupling of the motor 2 to the bearing 6.

The encoder 8 is a rotary encoder. The encoder 8 comprises an encoder wheel 10. The encoder 8 may be mechanically coupled to the bearing 6, e.g. via the axle 4, such that the encoder wheel 10 rotates around the axle 4 at the same speed as the bearing 6. There may be one or more further axles and/or a transmission (not shown) arranged for mechanically coupling the encoder wheel 10 to the bearing 6. In this case, it might be that the encoder wheel 10 does not rotate at the same speed as the bearing 6, wherein the speed of the encoder wheel 10 may be proportional to the speed of the bearing 6. A corresponding proportionality factor depends on the transmission used. The proportionality factor is basically known, because the transmission used is known, and may be considered when determining the speed of the vehicle. However, for explanatory reasons, the axle 4 only is shown as a representation of the mechanical coupling of the encoder wheel 10 to the bearing 6.

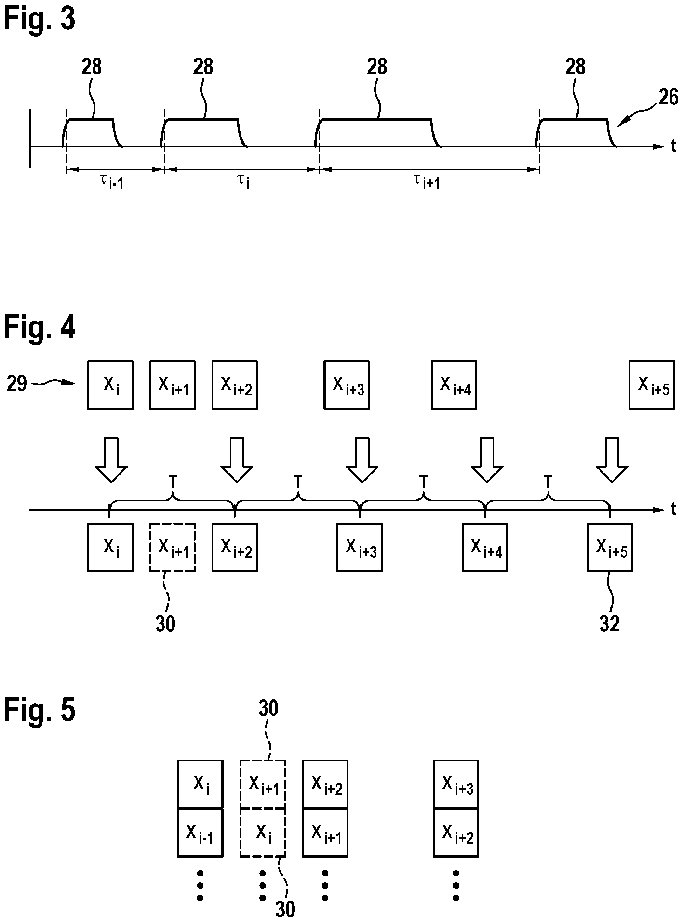

The encoder 8 is communicatively coupled to an integrated circuit 15. The encoder 8 is configured for generating an encoder signal 26, as further explained with respect to figures 2 and 3.

The integrated circuit 15 is configured for receiving the encoder signal 26 from the encoder 8 and to generate a position-speed-signal from the encoder signal 26. The position-speed-signal may comprise pairs of

values $x_i$, as further explained with respect to figures 4 and 5. The integrated circuit 15 may comprise or may be a microchip, e.g. an FPGA. The integrated circuit 15 may comprise a shift register 17. The integrated circuit 15 may be embodied as a component of the encoder 8 or may be a separate component, as shown in figure 1.

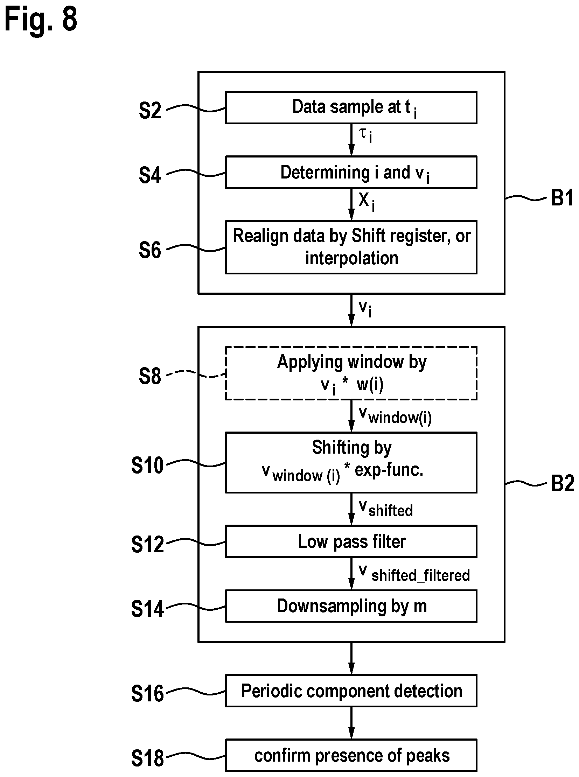

The controller 16 is configured for detecting a fault of the bearing 6. The controller 16 comprises an interface 18 for receiving the position-speed-signal including the pairs of values $x_i$ from the integrated circuit 15. The controller 16 comprises a memory 22. The memory 22 may be a working memory, e.g. an RAM. The memory 22 may be configured for temporarily storing data representing information derived from the encoder signal 26 and the position-speed-signal, in particular the pairs of values $x_i$. The controller 16 comprises a processor 20. The processor 20 is communicatively coupled to the interface 18 and the memory 22. The processor 20 is configured for carrying out a method for detecting a fault of the bearing 6 based on the encoder pulses and/or, respectively, measurement values, as explained below with respect to figure 8.

Fig. 2 shows a more detailed example of the encoder 8 and a diagram illustrating a detection principle of the encoder 8, in accordance with an embodiment of the present invention. From figure 2 it may be seen that the encoder wheel 10 has a given number of teeth 12, e.g. 300, 400, or up to 1000 teeth 12 and that the encoder 8 further comprises an encoder sensor 14 being arranged facing the teeth 12. The encoder sensor 14 is configured for generating an encoder signal 26 comprising an encoder pulse 28 for every tooth 12 of the teeth 12 passing the encoder sensor 14 (see figure 3). For example, in case of the encoder wheel 10 comprising 400 teeth 12, the encoder sensor 14 may generate 400 encoder pulses 26 per rotation of the encoder wheel 10, with one encoder pulse 26 for each passing tooth 12 and with each of the encoder pulses 26 comprising a raising edge, a falling edge and a high level in between. Alternatively, the encoder 8 may be configured for not only generating the encoder pulses 26 for the detected teeth 12, but also for raising and/or falling edges of the teeth and/or the gaps between the teeth 12. In this case, the number of encoder pulses 26 may be doubled. Alternatively or additionally, the encoder 8 may have more than one encoder sensor 14 and correspondingly more than one detection channel assigned to the corresponding encoder sensors 14, wherein the encoder sensors 14 may be arranged shifted with respect to each other. In this case, the number of the encoder pulses 28 per counted tooth 12 may increase accordingly. That the encoder signal 26 comprises the encoder pulses 28 may mean that the encoder signal 26 contains the encoder pulses 28 or consists of the encoder pulses 28.

The integrated circuit 15 may be configured for counting the encoder pulses 28 by incrementing a counter for every encoder pulse 28 of the encoder signal 26. As such, the integrated circuit 15 may be configured for assigning the consecutive unique numbers i to the counted encoder pulses 28, with i being a natural number. An alternative unique number i unambiguously assigning one of the encoder pulses 26 to the tooth 12 by which the corresponding encoder pulse 26 was generated may be an overall angle $\theta_i$ around which the encoder wheel 10 was rotated from the beginning of the measurement to the generation of the corresponding encoder pulse 26.

In addition, the integrated circuit 15 may be configured for determining the instantaneous angular speeds $v_i$ of the corresponding teeth 12 from the information contained in the encoder signal 26. In this case, the pairs of values $x_i$ may comprise the instantaneous angular speeds $v_i$ and the corresponding unique numbers i. Alternatively, the integrated circuit 15 may be configured for determining the pairs of values $x_i$ such that each pair comprises the corresponding unique number and an information from which the instantaneous angular speeds $v_i$ may be derived, e.g. a duration $\tau_i$, as explained below. In this case, the instantaneous angular speeds $v_i$ may be derived from the corresponding information, e.g. by the controller 16. The integrated circuit 15 may be further configured for generating the position-speed-signal 29 (see figure 4) comprising or at least being representative of the instantaneous angular speeds $v_i$ of the teeth 12 and the unique numbers i of the corresponding encoder pulses 28.

After one complete rotation of the encoder wheel 10, the integrated circuit 15 may keep on counting by further incrementing the counter and correspondingly the unique numbers i. For example, in the example of the encoder wheel 10 having 400 teeth 12, the unique number i is larger than 400 after one complete rotation. In the reality, a detection of a fault of the bearing 6 may be carried out based on an encoder signal 28 generated by more than 1.000 rotations of the encoder wheel 10, wherein the unique number i may be correspondingly high.

An angular resolution $F_s$ of the encoder 8 may be given by $2\pi/d\theta$, with $d\theta$ being an angle between a mid of one of the teeth 12 and the following tooth 12. In the case of e.g. 400 teeth 12, the angular resolution $F_s$ may be larger than 400. The overall angle $\theta$ over which the encoder wheel 10 has rotated since the beginning of a measurement may be given by $\theta = \sum_{l=1}^{i} d\delta_l$, with I being a natural number. The time at which the $i^{th}$ tooth 12 is passing the encoder sensor 14 is referred to as $t_i$. The duration $\tau_i$ between two adjacent ones of the teeth 12 are passing the encoder sensor 14 is given by $\tau_i = t_i - t_{i-1}$. The instantaneous speed $v_i$ of the tooth 12 with the unique number i when passing the encoder sensor 14 may be given by $v_i = 1/(F_s * \tau_i)$. The duration $\tau_i$ may be measured by a high-frequency clock (not shown), wherein a number of clock pulses of the clock is representative for the duration $\tau_i$. The clock function may be integrated within the integrated circuit 15.

So, the instantaneous angular speed $v_i$ may be

determined depending on the angular resolution $F_s$ of the encoder wheel 10, wherein the angular resolution $F_s$ may be determined depending on the given number of teeth 12 of the encoder wheel 10. Alternatively or additionally, the instantaneous angular speed $v_i$ may be determined depending on the information contained in the encoder signal 26, for example by the integrated circuit 15 communicatively coupled to the encoder 8 and receiving the encoder signal 26. Alternatively, the encoder 8 may determine the instantaneous angular speed $v_i$ and may encode it in the encoder signal 26. In this case, at least a part of the integrated circuit 15 may be a component of the encoder 8. As another alternative, the instantaneous angular speeds $v_i$ may be determined from the corresponding information by the controller 16.

Fig. 3 shows an example of the encoder signal 26 generated by the encoder 8 of figures 1 and 2, in accordance with an embodiment of the present invention.

The encoder signal 26 may comprise low levels and high levels, wherein the high levels represent the encoder pulses 28 and wherein each encoder pulse 28 has a raising edge and a falling edge with the corresponding high level ranging from the raising edge to the falling edge. For example, the encoder signal 26 has the high level when one of the teeth 12 passes the encoder sensor 14 and the low level when a gap between two of the teeth 12 passes the encoder sensor 14. Thus, a length in time of the encoder pulses 28 at the high level is representative for the time the corresponding tooth 12 needs to pass the encoder sensor 14. Alternatively, the encoder 8 may be configured for generating one encoder pulse 28 for each of the edges, i.e. one for a raising edge and one for a falling edge. In this case, the duration $\tau_i$ from one of the encoder pulses 28 to the next of the encoder pulses 28 is representative for the time the corresponding tooth 12 needs to pass the encoder sensor 14. Alternatively or additionally, the encoder 8 may be configured for generating two or more encoder pulses 28 for each one of the teeth 12, because of the encoder 8 comprising correspondingly two or more encoder sensors 14 and correspondingly two or more encoder channels, wherein the time the corresponding tooth 12 needs to pass the encoder sensor 14 may be determined from one of the channels in the same manner as if only one encoder channel would be present.

All of the encoder pulses 28 have the same length in time as long as the speed of rotation of the bearing stays constant. The encoder pulses 28 get longer more and more during a deceleration of the speed of rotation, because the duration during which the encoder sensor 14 "sees" every passing tooth 12 gets longer. The encoder pulses 28 get shorter more and more during an acceleration of the speed of rotation, because the duration during which the encoder sensor 14 "sees" every passing tooth 12 gets shorter. A duration between two raising edges of the encoder pulses 28, in particular the lengths in time of the high levels of the encoder pulses 28 and the gaps between the corresponding encoder pulses 28 are representative for the instantaneous angular speeds $v_i$ of the corresponding teeth 12. So, the encoder signal 26 is representative for the instantaneous angular speeds $v_i$ of the teeth 12 passing the encoder sensor 14.

Fig. 4 illustrates a principle of realigning instantaneous angular speeds $v_i$, in accordance with an embodiment of the present invention. Figure 4 shows several boxes with the pairs of values $x_{i-1}$, $x_i$, $x_{i+1}$, etc., with each of the pairs of values $x_i$ being representative for one of the instantaneous speeds $v_i$ and the corresponding unique number i, i.e. $x_i = (i; v_i)$. Alternatively, the overall angle $\theta$ may be used as the unique number and/or the duration $\tau_i$ may be used as the information being representative of the corresponding instantaneous speed $v_i$, as explained above. The upper line of pairs of values $x_i$ in figure 4 represents the position-speed-signal generated by the integrated circuit 15 from the encoder signal 26. Therefore, in the upper line of figure 4, the pairs of values $x_i$ are arranged in correspondence with the corresponding encoder pulses 28 of the encoder signal 26 shown in figure 3. In particular, as the durations $\tau_i$ get longer and longer with the time in figure 3, a distance between the boxes with the pairs of values $x_i$ gets longer and longer with the time in figure 4. In figure 4 as well as in figure 3, the time durations $\tau_i$ increase with the time, because a speed of rotation $v(t)$ of the encoder wheel 10 decreases in this example. In case of the speed of rotation $v(t)$ of the encoder wheel 10 is increasing, the time intervals $\tau_i$ would decrease with proceeding time and the boxes would come closer to each other with the time.

A data acquisition of the controller 16 may be carried out at fixed time intervals $T$ independent from the speed of rotation $v(t)$ of the encoder wheel 10. In figure 4, the lower line of pairs of values $x_i$ are read out at the fixed timer intervals T, wherein the moments in which the pairs of values $x_i$ are read out are characterized by the big empty vertical arrows. However, in case of the teeth 12 passing the encoder sensor 14 and the encoder sensor 14 generating the corresponding encoder pulses 28 faster than the information, in particular the pairs of values $x_i$, being read out, e.g. by the controller 16, one or more of the information, in particular pairs of values $x_i$, in particular the corresponding unique number i and instantaneous angular speed $v_i$ or duration $\tau_i$, may be missed, as e.g. a missed pair of values 30, representing the pair of values $x_{i+1}$. Whether the pair of values $x_{i+1}$ is missing or not may be determined by the controller 16 by checking whether the corresponding unique number i+1 is missing.

In order not to lose any information, in particular the corresponding instantaneous angular speed $v_{i+1}$ because of the missed pair of values 30, the corresponding instantaneous angular speed $v_{i+1}$ may be interpolated by the foregoing instantaneous angular speed $v_i$ and by the following instantaneous angular speed $v_{i+2}$. Alternatively, the shift register 17 may be provided and may be used not to lose the information because of the missed pair of values 30, as explained with respect to figure 5. Alternatively, in case of the position-speed-signal not comprising the instantaneous angular speeds $v_i$, the corresponding duration $\tau_{i+1}$ may be interpolated by the foregoing duration $\tau_i$ and the following duration $\tau_{i+2}$, and the corresponding instantaneous angular speed $v_{i+1}$ may be determined from the interpolated duration $\tau_{i+1}$.

The other way round, when the teeth 12 pass the encoder sensor 14 slower and the integrated circuit 15 generates the corresponding pairs of values $x_i$ correspondingly slower than the pairs of values $x_i$ are read out, e.g. by the controller 16, one or more of the pairs of values $x_i$ may be read out two, three or more times. From these duplicated pairs of values $x_i$ and the correspondingly duplicated information, one pair of values $x_i$ only may be stored for further processing and the other may be deleted.

Fig. 5 illustrates a principle of a usage of the shift register 17 to determine the missing information, i.e. the missing pair of values $x_i$, e.g. $x_{i+1}$ of figure 4, in particular the corresponding instantaneous angular speed $v_{i+1}$ or duration $\tau_{i+1}$, in accordance with an embodiment of the present invention. As may be seen from figure 5, no information gets lost by using the shift register 17, because in case of the one pair of values 30 is missing in the first line of the shift register 17, the same information and pair of values 30 may be read out from the second line of the shift register 17. However, in order to be safe not to lose any information, a size, length or storing capability of the shift register 17 must be chosen large enough to store all information which may be missed. This size, length or storing capability heavily depends on the difference between the speed at which the pairs of values $x_i$ are outputted by the integrated circuit 15 and the speed at which the pairs of values $x_i$ are readout by the controller 16. The size, length and/or storing capability may be determined empirically or by simulation. In figure 5, a shift register of length one is shown for explanatory reasons only. In practice, the shift register 17 might be much longer, especially long enough not to miss any pairs of values $x_i$.

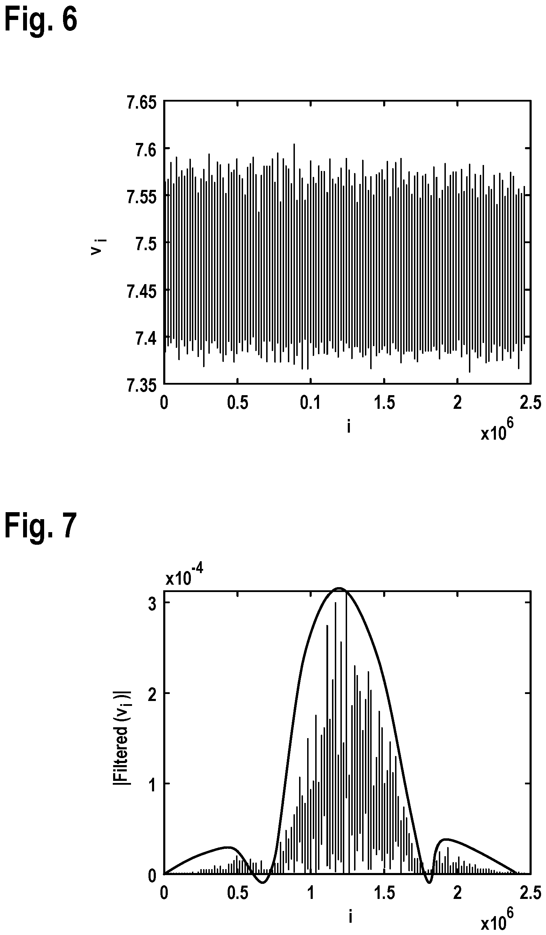

Fig. 6 shows an example of a speed signal, in accordance with an embodiment of the present invention. The speed signal is representative for instantaneous angular speeds $v_i$, with i being a natural number and with i running from 0 to n, for example.

Fig. 7 shows an example of a window applied to the speed signal shown in figure 6. The window may be a mathematical function. That the window is "applied" over the speed signal may mean that the speed signal is folded with the window and/or that the speed signal is multiplied with the window. The window may contribute to avoid artifacts coming from the finite and non-periodic nature of the measurement of the encoder 8. The window may contribute to remove high noise level coming from «discontinuities» at a beginning or end of the measurement of the encoder 8.

Fig. 8 shows a flow-chart of an exemplary embodiment of a method for detecting the fault of the bearing 6. Step S2 of the method may be carried out by the encoder 8. Step S4 of the method may be carried out by the integrated circuit 15. All other steps of the method may be carried out by the controller 16, in particular by the processor 20, e.g. while the bearing 6 is used and rotating, e.g. at varying speeds of rotation. An overall aim of the proposed fault detection method may be a reduction of the data collected by the encoder 8, e.g. from a total of a few Million measurement values to a few hundred measurement values, in order to process it directly, in other words online, in particular while the corresponding vehicle is driving, e.g. at varying speeds, e.g. with the controller 16, without losing frequency resolution in the required frequency range. So, the focus of the fault detection is put on the relevant frequency range only, keeping in mind that only a rough range, within the frequencies of the periodic components are, is known, but the exact frequencies are not known in advance. The controller 16 may comprise or may be a monitoring device.

In a first block B1 of the method, the data acquisition may be carried out.

In a second block B2 of the method, an output signal of the first block B1 is processed and the second block B2 is representative for a signal processing of the output signal of the first block B1.

In step S2 the encoder signal 26 may be generated by the encoder sensor 14, wherein the data is sampled at equidistant time intervals T. The encoder signal 26 may comprise consecutive encoder pulses 28. Each of the encoder pulses 28 has a length in time and as such is representative for the instantaneous angular speed $v_i$ of the corresponding tooth 12.

In a step S4, the encoder pulses 28 may be counted, e.g. by the integrated circuit 17, the consecutive unique numbers i may be assigned to the counted encoder pulses 28, and the instantaneous angular speeds $v_i$ may be determined depending on the read-out encoder pulses 28, in particular from the corresponding durations $\tau_i$. An output of the integrated circuit 15 may be the position-speed-signal 29 comprising the pairs of values $x_i$, comprising the unique numbers i and the corresponding instantaneous angular speeds $v_i$. Alternatively, the pairs of values $x_i$ each comprise the durations $\tau_i$ and the corresponding instantaneous angular speeds $v_i$ may be derived from the durations $\tau_i$ in following step S6, e.g. by the controller 16.

In step S6, the pairs of values $x_i$ may be read out, e.g. by the controller 16, and it may be determined whether one or more of the pairs of values $x_i$, and in particular the corresponding information, i.e. the unique number i, and the instantaneous angular speed $v_i$ or duration $\tau_i$, has been missed between two consecutively readouts. If one or more of the pairs of values $x_i$ have been missed between two consecutively readouts, the corresponding instantaneous angular speeds $v_i$ or duration $\tau_i$ may be determined, e.g. by interpolation or by the shift register, as explained above. Further, in step S6, the read-out pairs of values $x_i$ may be realigned such that an order of the realigned pairs of values $x_i$ corresponds to an

order of the corresponding unique numbers i. If no pairs of values $x_i$ are missing between two consecutive readouts, the speed signal may be generated such that it consists of the consecutive pairs of values $x_i$ comprising correspondingly consecutive unique numbers i.

Furthermore, in step S6, the speed signal consisting of the realigned instantaneous angular speeds $v_i$ may be generated. In the result, the output signal of the first block B1 may be representative of the realigned instantaneous angular speeds $v_i$. In case of the pairs of values $x_i$ each comprising the durations $\tau_i$ instead of the instantaneous angular speeds $v_i$, the corresponding instantaneous angular speeds $v_i$ may be determined from the durations $\tau_i$ before generating the speed signal.

In an optional step S8, the predetermined window explained with respect to figure 7 may be applied over the generated speed signal, before shifting the speed signal. A signal generated in step S8 may be referred to as $v_{window(i)}$.

In a step S10, the speed signal may be shifted depending on a predetermined shifting frequency $f_{shift}$. In case of step S8 has been carried out, $v_{window(i)}$ may be shifted, e.g. by multiplicating $v_{window(i)}$ with an exponential function comprising the shifting frequency $f_{shift}$. For example, the exponential function may be given by:

$$\exp\left(\frac{j * 2\pi i}{F_s} f_{shift}\right)$$

A signal generated in step S10 may be referred to as $v_{shifted}$.

In a step S12 a low pass filter may be applied on the shifted speed signal $v_{shifted}$. A corresponding shifted and filtered output signal of step S12 may be referred to as $v_{shifted\_filtered}$.

In a step S14 a decimated speed signal $v_{shifted\_filtered\_downsampled}$ may be determined from the shifted and filtered speed signal $v_{shifted\_filtered}$. The decimated speed signal $v_{shifted\_filtered\_downsampled}$ may comprise several values being representative for a subset of the realigned instantaneous angular speeds $v_i$. In the result, an output signal of the second block B2 may be the decimated speed signal $v_{shifted\_filtered\_downsampled}$. The decimated speed signal $v_{shifted\_filtered\_downsampled}$ may be determined from the shifted and filtered speed signal $v_{shifted\_filtered}$ by using only every $m^{th}$ value of the shifted and filtered signal $v_{shifted\_filtered}$ and by cancelling all other values of the shifted and filtered speed signal $v_{shifted\_filtered}$, with m being a natural number. "m" may for example be 10, such that the amount of values of the speed signal is decimated by the factor of 10. Alternatively, other values for m may be possible, e.g less than 10, e.g. 3 or 5, or more than 10, e.g. 50 or 100. The speed signal being representative of the realigned instantaneous angular speeds $v_i$ and being shifted, low pass filtered and decimated enables to carry out the fault detection during a rotation of the bearing 6 and thereby during an operation of a device comprising the bearing 6 while keeping a high resolution in a frequency range of interest.

In a step S16, one or more periodic components of the decimated speed signal $v_{shifted\_filtered\_downsampled}$ may be detected, e.g. by any appropriate method known in the art of periodic component detection. The detecting of the one or more of the periodic components of the decimated speed signal $v_{shifted\_filtered\_downsampled}$ may comprise carrying out a Fourier transformation on the decimated speed signal $v_{shifted\_filtered\_downsampled}$, determining a power spectrum depending on the correspondingly transformed speed signal, and identifying one or more maxima in the power spectrum as the one or more periodic components. Alternatively, the periodic component detection may be carried out by e.g. MUSIC (Multiple Signal Classification) or ESPRIT which are algorithms for detecting periodic component in signals known and widely used in the art.

In a step S18, the presence of one or more of the detected periodic components may be confirmed. Confirming the presence of one or more of the detected periodic components may comprise determining whether the detected periodic components are above noise level and/or determining whether the periodic components are recurrent in a sequence of measurements, because, if a fault is in fact present, this fault may generate the same periodic components again and again, what may be used for confirming the presence of the fault.

A computer program for detecting the fault of the bearing 6 may be provided. The computer program may be configured for carrying out the above method when being executed by the above controller 16.

A computer-readable medium on which the above computer program is stored may be provided. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer-readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| 2 | motor |
| 4 | axle |
| 6 | bearing |
| 8 | encoder |
| 10 | encoder wheel |
| 12 | tooth |
| 14 | sensor |
| 15 | integrated circuit |
| 16 | controller |
| 17 | shift register |
| 18 | interface |
| 20 | processor |
| 22 | memory |
| 26 | encoder signal |
| 28 | encoder pulse |
| 30 | missing pair of values |
| 32 | duplicated pair of values |
| $x_i$ | pair of values |
| $v_i$ | instantaneous angular speed |
| $t_i$ | time of $i^{th}$ measurement |
| $\tau_i$ | duration |
| $v(t)$ | speed of rotation at time t |
| i | unique number |
| s | seconds |
| $F_s$ | angular resolution |
| $\theta$ | angle of rotation |
| $\theta_i$ | overall angle |
| T | fixed time interval |
| B1 | first block |
| B2 | second block |
| $w(i)$ | window |
| $v_{shifted}$ | shifted and filtered speed signal |
| $v_{shifted\_filtered\_downsampled}$ | decimated speed signal |
| S2-S 18 | steps two to eighteen |

**Claims**

1. Method for detecting a fault of a bearing (6), the bearing (6) comprising an axle of rotation and being coupled to a rotary encoder (8), the rotary encoder (8) being communicatively coupled to an integrated circuit (15), the rotary encoder (8) comprising an encoder wheel (10) having a given number of teeth (12) and being coupled to the axle of the bearing (6) such that the encoder wheel (10) rotates around the axle of the bearing (6) at a speed which is proportional to a speed of the bearing (6) and an encoder sensor (14) being arranged facing the teeth (12) and being configured for generating an encoder signal (26) having at least one encoder pulse (28) for every tooth of the encoder wheel (10) passing the encoder sensor (14), wherein the integrated circuit (15) is configured for receiving the encoder signal (26), for counting the encoder pulses (28) from the encoder signal (26), for assigning consecutive unique numbers (i) to the counted encoder pulses (28), and for generating a position-speed-signal (29) containing information being representative of instantaneous angular speeds (vi) of the teeth (12) and of the unique numbers (i) of the corresponding encoder pulses (28), the method comprising:

    receiving the position-speed-signal (29) from the integrated circuit (15);
    determining the instantaneous angular speeds (vi) and the corresponding unique numbers (i) from the information contained in the position-speed-signal (29) several times;
    generating a speed signal comprising consecutive ones of the instantaneous angular speeds (vi);
    shifting the generated speed signal depending on a predetermined shifting frequency ($f_{shift}$);
    applying a low pass filter on a correspondingly shifted speed signal ($v_{shifted}$);
    determining a decimated speed signal ($v_{shifted\_filtered\_downsampled}$) from a correspondingly shifted and filtered speed signal ($v_{shifted\_filtered}$), wherein the decimated speed signal ($v_{shifted\_filtered\_downsampled}$) is representative for a subset of the instantaneous angular speeds (vi) represented by the shifted and filtered speed signal ($v_{shifted\_filtered}$); and
    detecting the fault of the bearing (6) depending on the determined decimated speed signal ($v_{shifted\_filtered\_downsampled}$).

2. Method according to claim 1, comprising, after determining the unique numbers (i) from the position-speed-signal (29) and before generating the speed signal:

    determining from the determined unique numbers (i) whether some of the information regarding one or more of the instantaneous angular speeds (vi) is missing;
    if the information regarding one or more of the instantaneous angular speeds (vi) is missing, determining the missing information,
    determining the instantaneous angular speeds (vi) from the information readout from the position-speed-signal (29) and from the determined missing information,
    realign the determined instantaneous angular speeds (vi) such that an order of realigned instantaneous angular speeds (vi) corresponds to an order of the corresponding consecutive numbers (i), and

generating the speed signal comprising the realigned instantaneous angular speeds (vi); or

if no information regarding the instantaneous angular speeds (vi) is missing,

generating the speed signal comprising the instantaneous angular speeds (vi) as represented by the corresponding information in the position-speed-signal (29).

3. Method according to claim 2, wherein

the integrated circuit (15) comprises a shift register (17) in which the information of the position-speed-signal (29) being representative of a predetermined amount of consecutive ones of the instantaneous angular speeds (vi) is stored,

the missing information is determined by reading the corresponding information from the shift register (17), and

the instantaneous angular speeds (vi) are determined from the information read out from the position-speed-signal and from the shift register (17).

4. Method according to claim 2, wherein
the missing information is determined by interpolating the information which is present.

5. Method according to one of the preceding claims, wherein

if one or more of the unique numbers (i) are determined two, three or more times, duplicates of the corresponding information and the corresponding unique numbers (i) are deleted, and the speed signal is generated such that it comprises each of the corresponding instantaneous angular speeds (vi) only once.

6. Method according to one of the preceding claims, comprising:
applying a predetermined window ($w(i)$) over the generated speed signal, before shifting the speed signal.

7. Method according to one of the preceding claims, wherein

the shifted and filtered speed signal ($v_{shifted\_filtered}$) consists of an amount of values, with these values being representative of the corresponding instantaneous angular speeds (vi); and

the decimated speed signal ($v_{shifted\_filtered\_downsampled}$) is determined from the shifted and filtered speed signal ($v_{shifted\_filtered}$) by using only every $m^{th}$ value of the shifted and filtered speed signal ($v_{shifted\_filtered}$) and by cancelling all other values of the shifted and filtered speed signal ($v_{shifted\_filtered}$), with m being a natural number.

8. Method according to one of the preceding claims, wherein

the fault of the bearing (6) is detected depending on the determined decimated speed signal ($v_{shifted\_filtered\_downsampled}$) by determining one or more periodic components of the decimated speed signal ($v_{shifted\_filtered\_downsampled}$) and by detecting the fault of the bearing (6) depending on the determined one or more periodic components.

9. Method according to claim 8, wherein
detecting the one or more periodic components of the decimated speed signal ($v_{shifted\_filtered\_downsampled}$) comprises carrying out a Fourier transformation on the decimated speed signal ($v_{shifted\_filtered\_downsampled}$), determining a power spectrum depending on the transformed speed signal, and identifying one or more maxima in the power spectrum as the one or more periodic components.

10. Method according to one of claims 8 or 9, comprising:
confirming the presence of one or more of the detected periodic components.

11. Method according to one of claims 8 to 10, comprising:

carrying out a predetermined number of measurements in accordance with claims one of claims 8 to 10, over a predetermined period of time and keeping measured amplitudes or another measure of intensities of the detected periodic components; and

using an evolution of the amplitude or, respectively, the other measure to predict a probability of a future fault of the bearing (6) and/or a time until the future fault of the bearing (6) is expected.

12. Controller (16) for detecting a fault of a bearing (6), the bearing (6) comprising an axle of rotation and being coupled to a rotary encoder (8), the rotary encoder (8) being communicatively coupled to an integrated circuit (15), the rotary encoder (8) comprising an encoder wheel (10) having a given number of teeth (12) and being coupled to the axle of the bearing (6) such that the encoder wheel (10) rotates around the axle of the bearing (6) at a speed which is proportional to a speed of the bearing (6) and an encoder sensor (14) being arranged facing the teeth (12) and being configured for generating an encoder signal (26) having at least one encoder pulse (28) for every tooth (12) of the encoder wheel (10) passing the encoder sensor (14), wherein the integrated circuit (15) is configured for receiving the encoder signal (26), for counting the encoder pulses (28) from the encoder signal (26), for assigning consecutive unique numbers (i) to the counted encoder pulses (28), and for generating a position-speed-signal (29) containing information being representative of instantaneous angular speeds (vi) of the teeth (12) and of the unique numbers (i) of the corresponding encoder pulses (28), the controller (16) comprising:

an interface (18) for receiving the position-speed-signal (29);
a memory (22) for storing the information contained in the position-speed-signal (29); and
a processor (20) communicatively coupled to the interface (18) and the memory (22), and being configured to carry out the method in accordance with one of the preceding steps based on the information.

13. Computer program for detecting a fault of a bearing (6), the bearing (6) comprising an axle of rotation and being coupled to a rotary encoder (8), the rotary encoder (8) being communicatively coupled to an integrated circuit (15), the rotary encoder (8) comprising an encoder wheel (10) having a given number of teeth (12) and being coupled to the axle of the bearing (6) such that the encoder wheel (10) rotates around the axle of the bearing (6) at a speed which is proportional to a speed of the bearing (6) and an encoder sensor (14) being arranged facing the teeth (12) and being configured for generating an encoder signal (26) having at least one encoder pulse (28) for every tooth (12) of the encoder wheel (10) passing the encoder sensor (14), wherein the integrated circuit (15) is configured for receiving the encoder signal (26), for counting the encoder pulses (28) from the encoder signal (26), for assigning consecutive unique numbers (i) to the counted encoder pulses (28), and for generating a position-speed-signal (29) containing information being representative of instantaneous angular speeds (vi) of the teeth (12) and of the unique numbers (i) of the corresponding encoder pulses (28), the computer program being configured for carrying out the method in accordance with claims 1 to 11 when being executed by a controller (16) in accordance with claim 12.

14. Computer-readable medium on which the computer program in accordance with claim 13 is stored.

# Fig. 1

# Fig. 2

$$\theta_i = i\delta\theta$$

$$\tau_i = t_i - t_{i-1}$$

i vs t$_i$

$$v_i = \frac{1}{F_s \tau_i}$$

# Fig. 3

# Fig. 4

# Fig. 5

## Fig. 6

## Fig. 7

# Fig. 8

```
          ┌─────────────────────────────────────┐
  S2 ──────│  Data sample at t_i                 │
          │             │ τ_i                    │
  S4 ──────│  Determining i and v_i              │────── B1
          │             │ X_i                    │
  S6 ──────│  Realign data by Shift register, or │
          │  interpolation                       │
          └─────────────────────────────────────┘
                        │ v_i
          ┌─────────────────────────────────────┐
  S8 ──────│  Applying window by                 │
          │  v_i * w(i)                          │
          │             │ v_window(i)            │
          │  Shifting by                         │
  S10 ─────│  v_window(i) * exp-func.            │────── B2
          │             │ v_shifted              │
  S12 ─────│  Low pass filter                    │
          │             │ v_shifted_filtered     │
  S14 ─────│  Downsampling by m                  │
          └─────────────────────────────────────┘
                        │
  S16 ─────│  Periodic component detection       │
                        │
  S18 ─────│  confirm presence of peaks          │
```

# EP 4 610 617 A1

**EUROPEAN SEARCH REPORT**

Application Number

EP 24 16 0135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 813 107 A (UNIV KUNMING SCIENCE & TECHNOLOGY) 29 July 2022 (2022-07-29) | 1,5-14 | INV.<br>G01M13/04 |
| A | * the whole document * | 2-4 | |
| A,D | RENAUDIN L ET AL: "Natural roller bearing fault detection by angular measurement of true instantaneous angular speed", MECHANICAL SYSTEMS AND SIGNAL PROCESSING, ELSEVIER, AMSTERDAM, NL, vol. 24, no. 7, 1 October 2010 (2010-10-01), pages 1998-2011, XP027154614, ISSN: 0888-3270 [retrieved on 2010-05-20] * the whole document * | 1-14 | |

**TECHNICAL FIELDS SEARCHED (IPC)**

G01M

The present search report has been drawn up for all claims

| Place of search | Date of completion of the search | Examiner |
|---|---|---|
| The Hague | 25 June 2024 | Amroun, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0135

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2024

| Patent document cited in search report | Publication date | Patent family member(s) | Publication date |
|---|---|---|---|
| CN 114813107 A | 29-07-2022 | NONE | |

EPO FORM P0459

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2630453 B1

**Non-patent literature cited in the description**

- **L. RENAUDIN** ; **F. BONNARDOT** ; **O. MUSY** ; **J.B. DORAY** ; **D. RE'MOND**. Natural roller bearing fault detection by angular measurement of true instantaneous angular speed. *Mechanical Systems and Signal Processing*, 2010, vol. 24, 1998-2011